Europäisches Patentamt

European Patent Office

Office européen des brevets

(11) Publication number: **0 514 981 A1**

## EUROPEAN PATENT APPLICATION

(21) Application number: **92201397.4**

(22) Date of filing: **18.05.92**

(51) Int. Cl.5: **C01B 13/11**

(30) Priority: **21.05.91 GB 9110999**

(43) Date of publication of application:
**25.11.92 Bulletin 92/48**

(84) Designated Contracting States:
**BE DE ES FR GB IT NL**

(71) Applicant: **AIR PRODUCTS AND CHEMICALS, INC.**
**7201 Hamilton Boulevard**
**Allentown, PA 18195-1501(US)**

(72) Inventor: **Defour, Michel**
**114 Rue d'en Haut**
**B-1370 Jodoigne(BE)**

(74) Representative: **Lucas, Brian Ronald**
**Lucas & Co. 135 Westhall Road**
**Warlingham Surrey CR6 9HJ(GB)**

(54) Method and apparatus for producing ozone.

(57) Gaseous oxygen is passed upwardly in the annular space between a central electrode (2) and a cylindrical electrode (3) to which a high voltage, high frequency signal is applied. Perfluorodecalin is continually passed down the inner surface of the cylindrical electrode (3) in the form of a film which serves both to cool the cylindrical electrode (3) and as a dielectric. The electrodes (2) and (3) may be in the form of a grid and may be coated with a metal oxide to inhibit decomposition of the ozone generated. Similarly, particles of metal oxide may be suspended in the liquid. A refrigeration unit (10) is provided to cool liquid en route to the electrodes (2, 3).

Fig.1

This invention relates to a method and an apparatus for producing ozone.

Ozone is generally produced by passing an oxygen containing gas, for example air, between a pair of electrodes. Typically one electrode comprises a rod and the other electrode a cylinder disposed circumjacent the rod. A glass tube is normally disposed close to the cylinder between the two electrodes.

The production of ozone is accompanied by the generation of heat. However, as the temperature increases the propensity of the ozone to decompose increases. As a result, the cylinder is normally surrounded by a cooling jacket through which water is pumped.

US-A-4 140 608 discloses pumping a liquid containing dissolved oxygen between and in contact with a pair of electrodes. The applicants have attempted to repeat the procedure described in this patent but have been unable to detect the formation of any ozone whatsoever.

According to the present invention there is provided a method of producing ozone, which method comprises the steps of passing a liquid between a pair of electrodes, characterized in that said method further comprises the step of passing an oxygen containing gas between said electrodes and in direct contact with said liquid.

The presence of the gas between the electrodes enables the formation of ozone.

Advantageously, said liquid is recirculated.

Preferably, said method includes the step of cooling liquid leaving the space between said electrodes.

It will be appreciated that the liquid chosen should not react with the ozone or promote its dissociation. It should also be resistant to thermal breakdown and resistant to degradation by plasma. Suitable liquids include halogenated organic compounds including aliphatic, cyclic and polycyclic fluorocarbons, perfluorinated ethers, perfluorinated amines and chlorofluorocarbons. A presently preferred liquid is perfluorodecalin ($C_{10}F_{18}$).

Advantageously, the liquid will dissolve all or at least part of the ozone formed. This may facilitate later recovery of the ozone. Suitable liquids are included in the previous listing.

Preferably, said method includes the step of recovering ozone from said liquid.

Preferably, at least one of said electrodes is in the form of a grid.

Advantageously, at least one of the electrodes comprises a metal selected from the group consisting of stainless steel and aluminium.

Preferably, at least one of said electrodes is coated with a compound selected from the group consisting of calcium fluoride; calcium tungstate; an oxide of a rare earth; a metal oxide selected from the group consisting of Al, Ni, Co, Ti, Cr; and mixtures thereof. Such coating may conveniently be achieved by anodization, plasma deposition, or simply gluing the coating to the electrode.

Advantageously, at least one of said electrodes comprises aluminium coated with $Al_2O_3$.

Preferably, particles of metal oxide for example oxides selected from the group consisting of Al Ni, Co, Ti, Cr and mixtures thereof are suspended in said liquid. Such particles are intended to inhibit the decomposition of the ozone formed.

In one embodiment, said liquid flows over at least one of said electrodes in a film.

In one arrangement, said electrodes extend upwardly, said oxygen containing gas is passed upwardly between said electrodes and said liquid is passed downwardly therebetween.

In another arrangement, said electrodes are generally horizontal and said liquid flows thereacross.

In another embodiment, said liquid flows between said electrodes and in contact therewith.

Preferably, said oxygen containing gas is bubbled through said liquid.

Advantageously, said oxygen containing gas is industrially pure oxygen.

The present invention also provides an apparatus for carrying out a method in accordance with the invention, which apparatus comprises a pair of electrodes and means for passing a liquid and oxygen between said electrodes; characterized in that said apparatus further comprises means to cause a film of liquid to flow between said electrodes, and means to allow an oxygen containing gas to flow between said electrodes and in contact with said liquid.

Preferably, said means is arranged to cause a film of liquid to flow over the surface of at least one of said electrodes.

Advantageously, said electrodes extend upwardly and said means comprises a trough adjacent the top of said at least one electrode, the arrangement being such that, in use, liquid flows into said trough and spills over the edge of said electrode.

Preferably, a dielectric is provided between said electrodes and said means is arranged to cause a film of liquid to flow over said dielectric.

Advantageously, said electrodes and said dielectric extend upwardly and said means comprises a trough adjacent the top of said dielectric, the arrangement being such that, in use, liquid flows into said trough and spills over the edge of said electrode.

Preferably, said apparatus includes a desorption vessel for recovering ozone dissolved in said liquid.

The present invention also provides an apparatus for carrying out a method in accordance with the present invention, which apparatus comprises a pair of electrodes and means for passing a liquid and oxygen between said electrodes, characterized in that said apparatus comprises a stack of pairs of generally horizontally extending electrodes, means for introducing said oxygen containing gas at or adjacent the bottom of said stack, and means for introducing said liquid at or adjacent the top of said stack, the arrangement being such that, in use, liquid cascades downwardly through said stack forming a film on the upper surface of each electrode and said oxygen containing gas passes upwardly through said stack.

For a better understanding of the invention reference will now be made, by way of example, to the accompanying drawings in which:-

Figure 1 is a schematic side view of a first embodiment of an apparatus in accordance with the present invention;

Figure 2 is a schematic side view of a second embodiment of an apparatus in accordance with the present invention;

Figure 3 is a schematic side view of a third embodiment of an apparatus in accordance with the present invention;

Figure 4 is a schematic side view of a fourth embodiment of an apparatus in accordance with the present invention;

Figure 5 is a schematic side view of a fifth embodiment of an apparatus in accordance with the present invention;

Figure 6 is a schematic side view of a sixth embodiment of an apparatus in accordance with the present invention;

Figure 7 is a schematic side view of a seventh embodiment of an apparatus in accordance with the present invention; and

Figure 8 is a schematic side view of an eighth embodiment of an apparatus in accordance with the present invention.

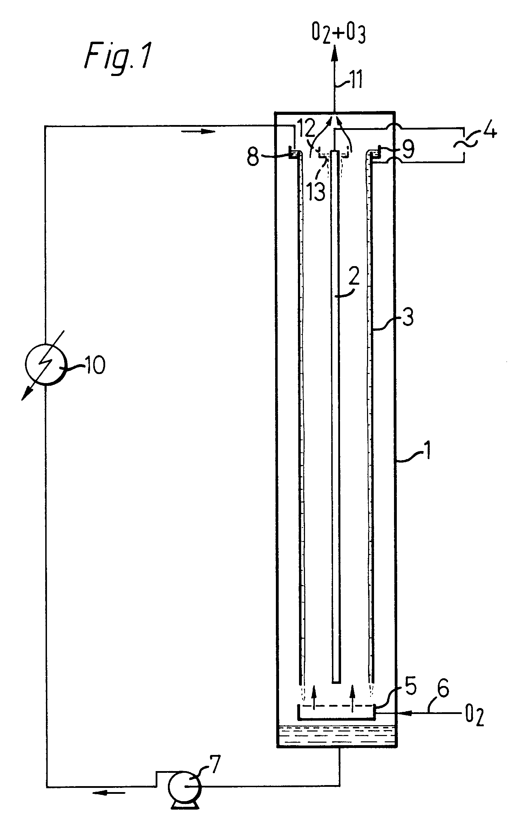

Referring to Figure 1 of the drawings, a glass tube 1 contains a central electrode 2 surrounded by a cylindrical electrode 3. The central electrode 2 and the cylindrical electrode 3 are both made of stainless steel and a potential of from 1 KV to 30 KV (typically from 2-15 KV) volts is applied across them at a frequency of from 50 Kz to 3000 Hz (typically 400-600 Hz) from an alternating current source 4.

A diffuser 5 is positioned in the bottom of the glass tube 1 beneath the central electrode 2 and the cylindrical electrode 3 and is connected to a source of industrially pure oxygen (not shown) by a line 6.

A pump 7 is arranged to pump a cold liquid into a trough 8 circumjacent the cylindrical electrode 3. The outer wall 9 of the trough 8 is slightly higher than the top of the cylindrical electrode 3 so that the liquid flows over the top of the cylindrical electrode 3 and down its inner surface in the form of a film. The liquid collects in the bottom of the glass tube 1 and is returned to the pump 7. A refrigeration unit 10 is also provided to cool the liquid leaving the pump 7.

In operation liquid, preferably perfluorodecalin, is pumped through refrigeration unit 10 and into trough 8. It then flows down the inner surface of the cylindrical electrode 3.

An alternating voltage of 6 Kv at a frequency of 500 Hz is applied to the electrodes and oxygen is introduced into the diffuser 5 through line 6.

As the oxygen rises between the central electrode 2 and the cylindrical electrode 3 ozone is formed and a mixture of oxygen and ozone leaves the glass tube 1 through outlet 11.

It will be appreciated that since the liquid is cold and is continually applied to the inner surface of the cylindrical electrode 3 the temperature within the glass tube 1 can be kept relatively low. Furthermore, the liquid acts as a dielectric which is continually being renewed.

If desired the central electrode 2 may also be cooled. A suitable arrangement is shown in dotted lines and includes a trough 12 disposed circumjacent the central electrode 2 and provided in its bottom 13 with slots adjacent the central electrode 2. In operation the trough 12 is provided with liquid from the pump 7 and this flows through the slots and over the outside of the central electrode 2 as a film.

It will be appreciated that some of the ozone initially formed will dissolve in the liquid and could be recovered therefrom. However, in this embodiment the liquid is simply recirculated.

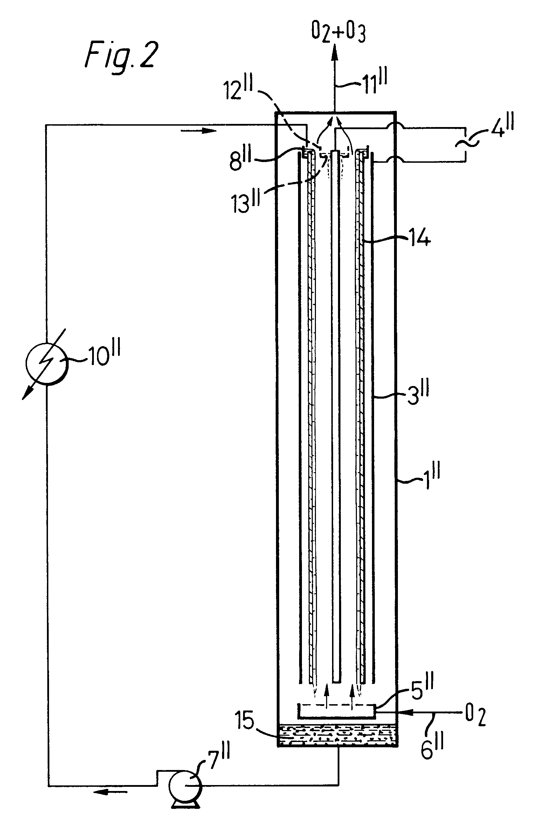

The arrangement shown in Figure 2 is similar to that shown in Figure 1 and parts with similar functions have been identified by the same reference numeral with the addition of superscript II. This embodiment differs from that shown in Figure 1 in that a glass cylinder 14 is provided between the central electrode 2II of the cylindrical electrode 3II and adjacent the inner wall of the cylindrical electrode 3II.

In this embodiment the liquid is allowed to flow over the inner wall of the glass cylinder 14. Furthermore, the liquid contains small particles of aluminium oxide 15 in suspension. This suppresses the tendency for the ozone produced to decompose.

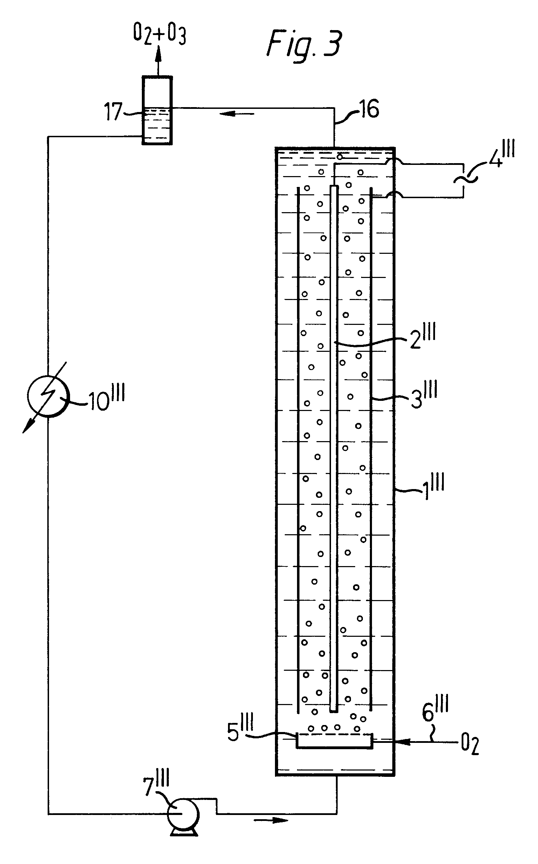

Figure 3 shows an embodiment which is generally similar to that shown in Figures 1 and 2 and parts having similar functions have been identified by the same reference numerals with the addition of the superscript III. In this embodiment the pump 7III pumps liquid upwardly through the glass tube 1III between the central electrode 2II and the cylin-

drical electrode 3[III] and circumjacent the cylindrical electrode 3[III]. This provides excellent cooling.

The liquid, together with bubbles of oxygen and ozone are passed through line 16 to phase separator 17 where the gaseous oxygen and ozone are separated from the liquid which is cooled in refrigeration unit 10[III] and returned to the pump 7[III].

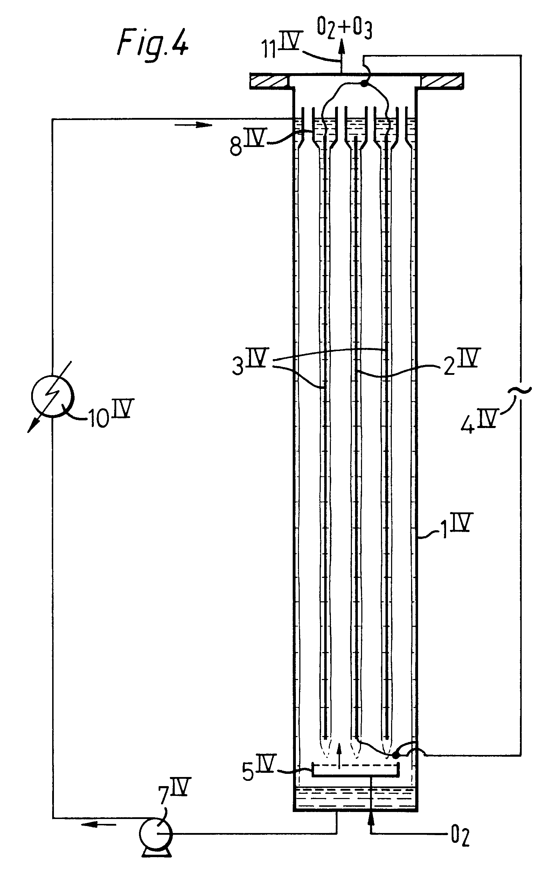

The embodiment shown in Figure 4 is generally similar to that shown in Figure 1 and parts having similar functions have been identified by the same reference numerals with the superscript [IV]. In this embodiment the glass tube 1 has been replaced by a stainless steel container 1[IV] of rectangular cross-section. The central electrode 2, which was in the form of a rod, has been replaced by a flat plate electrode 2[IV], and the cylindrical electrode 3 by two flat plate electrodes 3[IV] disposed to either side of the flat plate electrode 2[IV].

The flat plate electrode 2[IV] and the stainless steel container 1[IV] are electrically connected to one side of an alternative current source 4[IV] and the two flat plate electrodes 3[IV] are electrically connected to the other side.

In operation, pump 7[IV] pumps liquid through refrigeration unit 10[IV] into a distributor 8[IV] which is made of insulating material and causes a film of liquid to flow down either side of flat plate electrodes 2[IV] and 3[IV] and the inside wall of the stainless steel container 1[IV].

Oxygen is introduced into the stainless steel container 1 through a diffuser 5[IV] and passes upwardly between the electrodes. Ozone is formed and a mixture of oxygen and ozone leave the stainless steel container via outlet 11[IV].

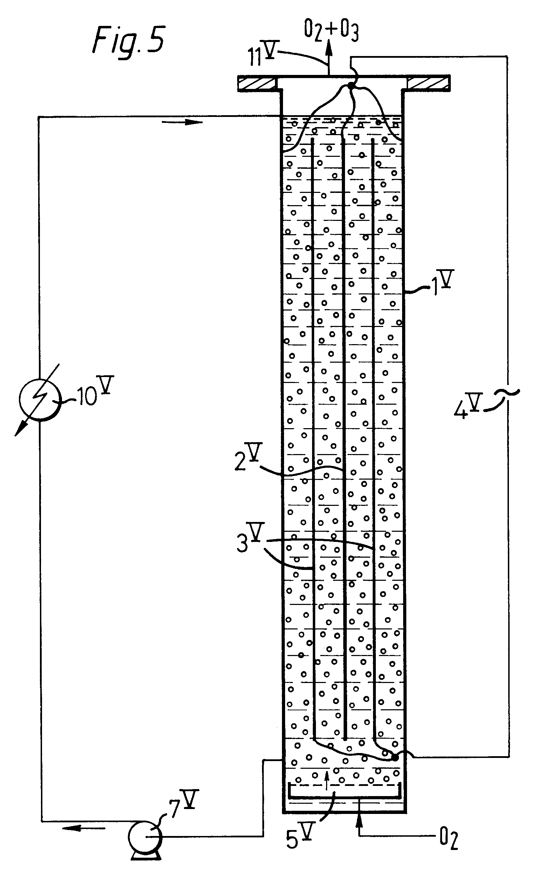

The embodiment shown in Figure 5 is of similar construction to the embodiment shown in Figure 4 and parts having similar functions have been identified by the same reference numeral with the superscript [V].

In operation liquid is pumped from pump 7[V] through refrigeration unit 10[V] where it is cooled. It is then introduced into the top of stainless steel container 1[V] and passes downwardly through the container 1[V] in countercurrent flow to the upwardly flowing oxygen entering the container 1[V] through diffuser 5[V].

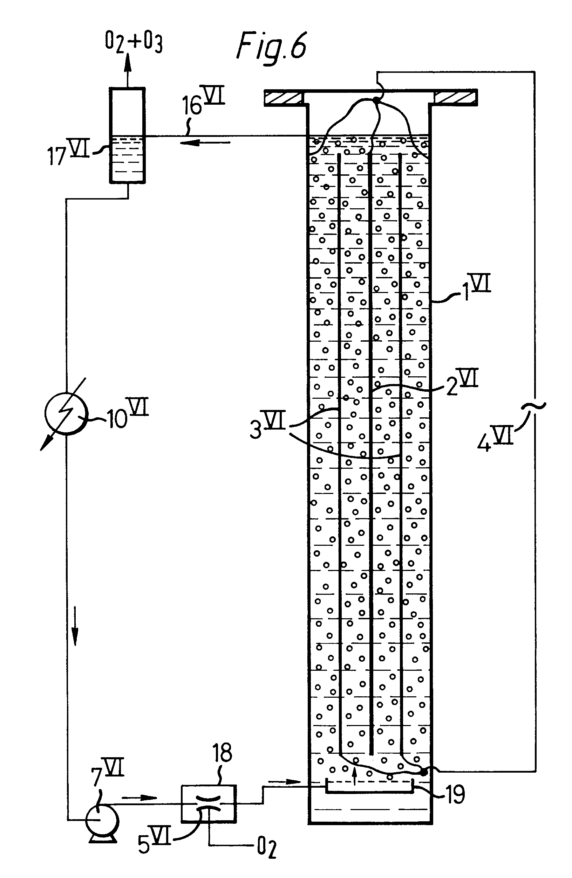

The embodiment shown in Figure 6 is generally similar to that shown in Figure 5 and parts having similar functions have been identified by the same reference numeral with the superscript [VI].

In operation cooled liquid from pump 7[VI] is introduced into a premixing chamber 18 where it is intimately mixed with oxygen introduced through a mixer 5[VI]. The two phase mixture is then introduced into the bottom of the stainless steel container 1[VI] via a distributor 19. As the oxygen rises between the electrodes ozone is formed and leaves the top of the stainless steel container 1[VI] through pipe 16[VI]

together with the liquid. The gaseous fraction is separated from the liquid in place separator 17[VI] whilst the liquid fraction is cooled in refrigeration unit 10[VI] before being returned to pump 7[VI].

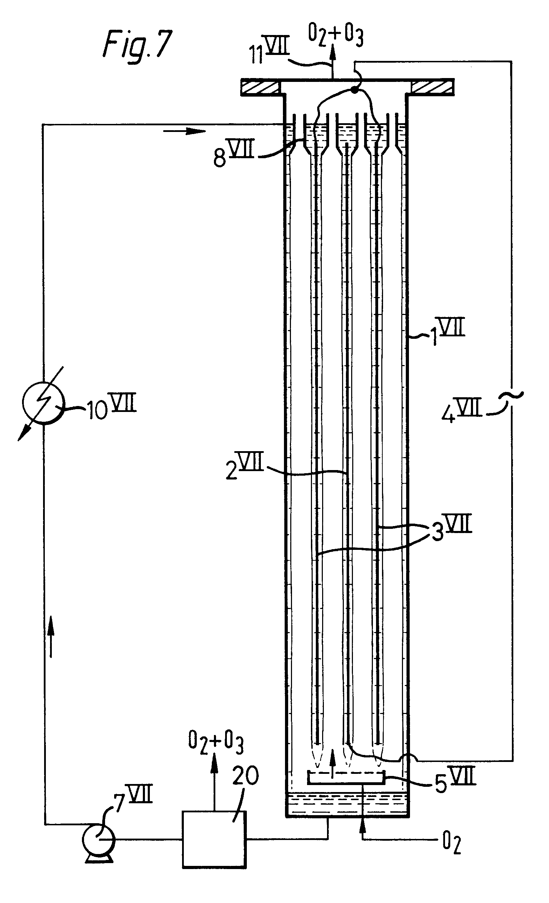

The embodiment shown in Figure 7 is generally similar to that shown in Figure 4 and parts with similar functions have been identified by the same reference numerals with the superscript [VII].

In this embodiment the liquid leaving the bottom of the container 1[VII], which contains a proportion of dissolved oxygen and/or ozone, is passed into a desorption vessel 20 where the gases are recovered. This is particularly advantageous where the liquid preferentially absorbs ozone so that the gas desorbed in the desorption vessel 20 is richer in ozone than the gas leaving through outlet 11. The desorption may be achieved, for example, by depressurization, by the application of a vacuum, by the application of a modest amount of heat (not sufficient to cause excessive decomposition of the ozone) or by a combination of methods.

Various modifications to the embodiments shown are envisaged, for example the electrodes may be formed as a grid rather than a sheet. Furthermore, the electrodes may be coated with a material which tends to inhibit the tendency of the ozone particles to decompose. A particularly suitable combination is an aluminium electrode coated with aluminium oxide.

Whilst it is preferred that the electrodes should extend in an upwardly extending or generally vertical plane the embodiments shown in, for example, Figures 3, 5 or 6 could conceivably be operated with the electrodes extending generally horizontally.

Should local overheating occur part of the liquid may vaporize without harm. The liquid so vaporized may be condensed and returned downstream of the electrodes.

If desired the casing could be cooled externally, for example by a water jacket.

Although Figure 2 shows a thin layer of dielectric spaced from the cylindrical electrode the dielectric could have been formed on the electrode, for example by plasma coating.

It should be noted that, as stated above, the electrodes can be in the form of grids. Such a construction is totally contrary to the prior art since discharge points form around protrusions and continued discharge in one area can damage the dielectric. In the present invention the dielectric is the liquid which is continually being replenished hence this problem does not occur.

From experiments we have discovered that the yield from the embodiments shown in Figures 1, 2, 4 and 7 are better than the yield from the embodiments shown in Figures 3, 5 and 6. This was somewhat unexpected as the greater use of liquid and gas bubbles in these later embodiments appeared to offer a greater cooling potential combined with a greater surface area for mass and heat transfer between the gas and the liquid.

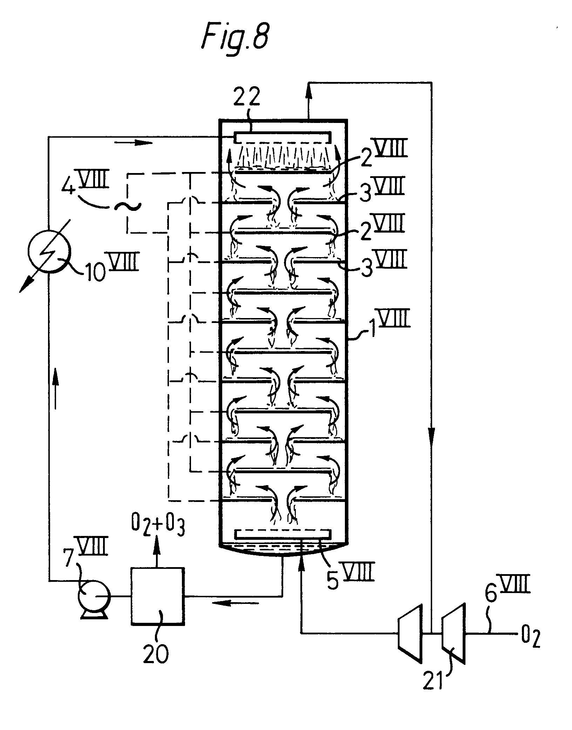

Figure 8 shows a pilot plant apparatus designed on the basis of results obtained to date. Parts having functions similar to parts in previous embodiments have been identified by the same reference numeral with the addition of the superscript $^{VIII}$.

The apparatus comprises a stainless steel vessel $1^{VIII}$ having a plurality of alternate electrodes $2^{VIII}$ and $3^{VIII}$ arranged in a stack. The electrodes $3^{VIII}$ are welded to the wall of the stainless steel vessel $1^{VIII}$ which is connected to one side of an alternating current source $4^{VIII}$ whilst the electrodes $2^{VIII}$ are insulated from the stainless steel vessel $1^{VIII}$ and connected to the other side of the alternating current source $4^{VIII}$.

In use, commercially pure oxygen from line $6^{VIII}$ is compressed in the first stage of a low pressure compressor 21. The commercially pure oxygen is mixed with recycled oxygen containing a small quantity of ozone from the top of the stainless steel vessel $1^{VIII}$ and the gaseous mixture is further compressed and introduced into the bottom of the stainless steel vessel $1^{VIII}$ via a diffuser $5^{VIII}$. The gaseous mixture wends its way upwardly through the stainless steel vessel $1^{VIII}$ as indicated by the arrows. As it passes between the electrodes $2^{VIII}$ and $3^{VIII}$ ozone is formed and dissolves into the liquid (perfluorodecalin) which flows across each electrode $2^{VIII}$, $3^{VIII}$ in a film and cascades down the stainless steel vessel $1^{VIII}$.

The liquid containing dissolved ozone and oxygen is passed to desorption vessel 20 where the liquid is subjected to a vacuum to desorb the dissolved ozone and oxygen. The liquid is then pumped by pump $7^{VIII}$ through heat exchanger $10^{VIII}$ where it is cooled before being introduced into the top of the stainless steel vessel $1^{VIII}$ via spray header 22.

Various modifications to the apparatus disclosed are envisaged. For example, whilst Figure 8 shows gaseous oxygen being recirculated it would be possible to dispense with recirculation and maintain the gas pressure in the stainless steel vessel $1^{VIII}$ substantially constant. Such an arrangement would, however, be less conducive to mass transfer.

Various tests have been carried out to determine the effect of coatings on the electrodes and these are reported in the following Examples.

Example 1

Titanium dioxide powder was added to a viscous aqueous solution of sodium silicate to form a slurry. A layer of the slurry is then applied to the surfaces of aluminium electrodes.

Further titanium dioxide power was then sprinkled over the electrodes which were then dried.

In use in an embodiment similar to the embodiment shown in Figure 1 a very substantial increase in the product of ozone compared with the use of uncoated aluminium electrodes was observed.

Example 2

The procedure of Example 1 was repeated except cerium oxide was used in place of titanium dioxide. Again a very substantial increase in the production of ozone compared with the use of uncoated aluminium electrodes was noted.

Example 3

The procedure of Example 1 was repeated using calcium fluoride in place of titanium oxide. Again a very substantial increase in the production of ozone compared with the use of uncoated aluminium electrodes was noted.

From the above examples it was concluded that the presence of rare earth oxides may also have a beneficial effect on the presence of ozone. Calcium fluoride is relatively transparent to ultra-violet light and similar compounds which are also relatively transparent to ultra-violet light may also have the same effect. It is also anticipated that calcium tungstate will have a beneficial effect.

**Claims**

1. A method of producing ozone, which method comprises the steps of passing a liquid between a pair of electrodes $(2,3;2^{II},3^{II};2^{III},3^{III};2^{IV},3^{IV};2^{V},3^{V};2^{VI},3^{VI};$ $2^{VII},3^{VII};2^{VIII},3^{VIII})$, characterized in that said method further comprises the step of passing an oxygen containing gas between said electrodes $(2,3;2^{II},3^{II};$ $2^{III},3^{III};2^{IV},3^{IV};2^{V},3^{V};2^{VI},3^{VI};2^{VII},3^{VII};2^{VIII},3^{VIII})$,and in direct contact with said liquid.

2. A method according to Claim 1, characterized in that said liquid is recirculated.

3. A method according to Claim 1 or 2, including the step of cooling liquid leaving the space between said electrodes $(2,3;2^{II},3^{II};2^{III},3^{III};2^{IV},3^{IV};2^{V},3^{V};2^{VI},3^{VI};$ $2^{VII},3^{VII};2^{VIII},3^{VIII})$.

4. A method according to Claim 1, 2 or 3, wherein said liquid is an halogenated organic compound.

5. A method according to Claim 4, characterized in that said liquid is selected from the group consisting of aliphatic, cyclic and polycyclic fluorocarbons, perfluorinated ethers, perfluorinated amines and chlorofluorocarbons.

6. A method according to Claim 5, characterized in that said liquid is perfluorodecalin.

7. A method according to any preceding Claim, including the step of recovering ozone from said liquid.

8. A method as claimed in any preceding Claim, characterized in that at least one of said electrodes (2,3;$2^{II}$,$3^{II}$;$2^{III}$,$3^{III}$;$2^{IV}$,$3^{IV}$;$2^{V}$,$3^{V}$;$2^{VI}$,$3^{VI}$;$2^{VII}$, $3^{VII}$;$2^{VIII}$,$3^{VIII}$) is in the form of a grid.

9. A method as claimed in any preceding Claim, characterized in that at least one of said electrodes (2,3;$2^{II}$,$3^{II}$;$2^{III}$,$3^{III}$;$2^{IV}$,$3^{IV}$;$2^{V}$,$3^{V}$;$2^{VI}$,$3^{VI}$;$2^{VII}$, $3^{VII}$;$2^{VIII}$,$3^{VIII}$) comprises a metal selected from the group consisting of stainless steel and aluminium.

10. A method as claimed in any preceding Claim, characterized in that at least one of said electrodes (2,3;$2^{II}$,$3^{II}$;$2^{III}$,$3^{III}$;$2^{IV}$,$3^{IV}$;$2^{V}$,$3^{V}$;$2^{VI}$,$3^{VI}$;$2^{VII}$, $3^{VII}$;$2^{VIII}$,$3^{VIII}$) is coated with a compound selected from the group consisting of calcium fluoride; calcium tungstate; an oxide of a rare earth; a metal oxide selected from the group consisting of Al, Ni, Co, Ti, Cr; and mixtures thereof.

11. A method as claimed in any preceding Claim, characterized in that at least one of said electrodes (2,3;$2^{II}$,$3^{II}$;$2^{III}$,$3^{III}$;$2^{IV}$,$3^{IV}$;$2^{V}$,$3^{V}$;$2^{VI}$,$3^{VI}$;$2^{VII}$, $3^{VII}$;$2^{VIII}$,$3^{VIII}$) comprises aluminium coated with aluminium oxide.

12. A method as claimed in any preceding Claim, characterized in that particles of metal oxide are suspended in said liquid.

13. A method as claimed in any preceding Claim, characterized in that said liquid flows over at least one of said electrodes (3,$3^{II}$;$2^{IV}$,$3^{IV}$;$2^{VII}$,$3^{VII}$;$2^{VIII}$, $3^{VIII}$) in a film.

14. A method as claimed in Claim 13, characterized in that said electrodes extend upwardly, said oxygen containing gas is passed upwardly between said electrodes (2,3;$2^{II}$,$3^{II}$;$2^{IV}$,$3^{IV}$;$2^{VII}$,$3^{VII}$) and said liquid is passed downwardly therebetween.

15. A method as claimed in Claim 13, characterized in that said electrodes ($2^{VIII}$,$3^{VIII}$) are generally horizontal and said liquid flows thereacross.

16. A method as claimed in any of Claims 1 to 12, characterized in that said liquid flows between said electrodes ($2^{III}$,$3^{III}$;$2^{V}$,$3^{V}$;$2^{VI}$, $3^{VI}$) and in contact therewith.

17. A method as claimed in Claim 16, characterized in that said oxygen containing gas is bubbled through said liquid.

18. A method as claimed in any preceding Claim, characterized in that said oxygen containing gas is industrially pure oxygen.

19. An apparatus for carrying out a method according to Claim 1, which apparatus comprises a pair of electrodes (3;$3^{II}$;$2^{IV}$,$3^{IV}$;$2^{VII}$,$3^{VII}$) and means for passing a liquid and oxygen between said electrodes (3;$3^{II}$;$2^{IV}$,$3^{V}$;$2^{VII}$,$3^{VII}$)>, characterized in that said apparatus further comprises means (8;$8^{II}$;$8^{IV}$;$8^{VII}$) to cause a film of liquid to flow between said electrodes, and means to allow an oxygen containing gas to flow between said electrodes and in contact with said liquid.

20. An apparatus as claimed in Claim 19, characterized in that said means (8;$8^{II}$;$8^{IV}$;$8^{VII}$) is arranged to cause a film of liquid to flow over the surface of at least one of said electrodes (3;$3^{II}$;$2^{IV}$,$3^{IV}$;$2^{VII}$,$3^{VII}$).

21. An apparatus as claimed in Claim 20, characterized in that said electrodes (2,3;$2^{II}$,$3^{II}$) extend upwardly and said means comprises a trough (8;$8^{II}$) adjacent the top of said at least one electrode, the arrangement being such that, in use liquid flows into said trough (8;$8^{II}$) and spills over the edge of said electrode.

22. An apparatus as claimed in Claim 19, 20 or 21, characterized in that a dielectric (14) is provided between said electrodes ($2^{II}$;$3^{II}$) and said means is arranged to cause a film of liquid to flow over said dielectric.

23. An apparatus as claimed in Claim 22, characterized in that said electrodes ($2^{II}$;$3^{II}$) and said dielectric (14) extend upwardly and said means comprises a trough adjacent the top of said dielectric, the arrangement being such that, in use, liquid flows into said trough and spills over the edge of said electrode.

24. An apparatus as claimed in any of Claims 19 to 24, characterized in that it includes a desorption vessel (20) for recovering ozone dissolved in said liquid.

25. An apparatus for carrying out a method according to Claim 1, which apparatus comprises a pair of electrodes ($2^{VIII}$,$3^{VIII}$) and means for passing a liquid and oxygen between said electrodes, characterized in that said apparatus comprises a stack of pairs of generally horizontally extending electrodes ($2^{VIII}$,$3^{VIII}$), means ($5^{VIII}$) for introducing said oxygen containing gas at or adjacent the bottom of said stack, and means (22) for introducing said liquid at or adjacent the top of said stack, the arrangement being such that, in use, liquid cascades downwardly through said stack forming a film on the upper surface of each electrode and said oxygen containing gas passes upwardly through said stack.

Fig.1

$O_2+O_3$

$O_2$

# Fig.2

$O_2 + O_3$

Fig. 3

Fig.4

EP 0 514 981 A1

Fig.5

Fig.6

Fig.7

*Fig.8*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,X | US-A-4 140 608 (V.A. VASEEN)<br>* column 1, line 58 - column 3, line 20 *<br>* column 5, line 48 - column 8, line 59 *<br>* claims; example * | 1,2 | C01B13/11 |
| D,A | IDEM | 3-7,13,<br>16,<br>18-20,24 | |
| | --- | | |
| X | US-A-4 351 734 (G. KAUFFMAN)<br>* column 1, line 62 - column 2, line 37 *<br>* figure 1 * | 1,9,17 | |
| | ----- | | |
| | | | TECHNICAL FIELDS SEARCHED (Int. Cl.5 ) |
| | | | C01B<br>B01J |

The present search report has been drawn up for all claims

| Place of search | Date of completion of the search | Examiner |
|---|---|---|
| THE HAGUE | 01 SEPTEMBER 1992 | VAN DER POEL W. |

EPO FORM 1503 03.82 (P0401)